# EUROPÄISCHE PATENTSCHRIFT

(11) **EP 0 560 764 B1**
(45) Veröffentlichungstag und Bekanntmachung des Hinweises auf die Patenterteilung: **08.01.1997**
(21) Anmeldenummer: 91906184.6
(22) Anmeldetag: 18.03.1991
(51) Int. Cl.: G21C 3/32

(54) **BRENNELEMENT ODER STEUERELEMENT MIT EINER LÖSBAREN VERRIEGELUNG ZWISCHEN KASTEN UND OBEREN ODER UNTEREN ENDTEIL DES ELEMENTES**
FUEL OR CONTROL ELEMENT WITH A RELEASABLE LOCK BETWEEN CASING AND TOP OR BOTTOM OF THE ELEMENT
ELEMENT COMBUSTIBLE OU ELEMENT DE COMMANDE AVEC DISPOSITIF DE VERROUILLAGE LIBERABLE MONTE ENTRE LE CAISSON ET L'EXTREMITE SUPERIEURE OU INFERIEURE DE L'ELEMENT

(30) Priorität: 05.12.1990 DE 4038748; 21.12.1990 DE 4041350
(43) Veröffentlichungstag der Anmeldung: 22.09.1993
(73) Patentinhaber: SIEMENS AKTIENGESELLSCHAFT, 80333 München (DE)
(72) Erfinder: RAU, Peter, D-8551 Leutenbach (DE); SAUERMANN, Walter, D-8551 Hemhofen (DE)
(86) Internationale Anmeldenummer: DE9100230
(87) Internationale Veröffentlichungsnummer: WO9210839

(56) Entgegenhaltungen:
- EP-A- 0 383 662
- FR-A- 2 551 248
- US-A- 3 169 097

## Beschreibung

Die Erfindung betrifft ein Brennelement oder Steuerelement für einen Kernrekator mit einem langgestreckten Kasten, dessen Innenraum einen polygonalen Querschnitt aufweist und von Seitenwänden begrenzt ist, die zu einer Längsachse parallel verlaufen. Der Kasten ist mindestens an einem Ende, z.B. am oberen Ende, offen. Ein Bündel zur Achse paralleler Stäbe oder ein langgestreckter Absorberkörper ist in den Innenraum eingesetzt. Zum Montieren des Elementes wird ein Endteil von außen axial in den Kasten eingeführt, dessen parallel zur Achse verlaufende Seitenflächen dem polygonalen Querschnitt des Kastenraumes angepaßt sind.

Die Stabbündel von Reaktoren, bei denen das Betriebsmedium eine hohe Differenz zwischen Einlauftemperatur und Austrittstemperatur aufweist, erfordern Strukturen zur Führung der Betriebsmittelströmung. Derartige Reaktoren sind z.B. Brutreaktoren oder manche gaspekühlte Reaktoren, und auch Siedewasserreaktoren und manche Druckwasserreaktoren sowjetischer Konstruktion weisen solche Strukturen zum Kanalisieren der Strömung auf.

Derartige Strömungskanäle können fester Bestandteil der Reaktor-Einbauten sein, die nicht demontierbar oder auswechselbar sind. Sind sie dagegen mit dem Stabbündel fest oder lösbar verbunden, so werden sie allgemein als "Brennelement-Kasten" bezeichnet. Sie verbinden eine untere und obere Tragstruktur für die Brennelemente ("Brennelementkopf" und "Brennelementfuß"). Dabei kann es erforderlich sein, durch konstruktive Maßnahmen aus Kasten, Kopf und Fuß eines Brennelementes ein Skelett zu Tragen der Brennstäbe bilden. Häufig stehen aber im Reaktorkern die Brennelemente so dicht beieinander, daß deren verband keine Spalten enthält, die für Montageelemente und Werkzeuge zum Montieren oder Demontieren des Brennelementes zur verfügung stünden.

Bestehen der Brennelementkasten und das Brennelement-Oberteil aus artgleichen Werkstoffen, so werden diese Teile manchmal miteinander verschweißt. Die Verbindung ist dabei nicht nur Gewichtskräften (axiale Belastung) ausgesetzt, vielmehr treten auch radiale Kräfte auf, die den Brennelementkasten verformen, da das Kühlmittel mit großem Druck durch den Kasten geleitet wird.

Eine formschlüssige Verbindung mittels senkrecht zur Brennelement-Achse eingreifender Stifte oder Schrauben erfordert besondere Vorkehrungen, um diese Kleinteile gegen ein Verlieren zu sichern. Derartige Verbindungen müssen ferner auch erheblichen Kräften standhalten können, so daß eine sichere Verbindung mehr als ein derartiges Verriegelungselement erfordert. Dadurch wird aber die Fertigung kompliziert und teuer.

Radial eingreifende Schrauben und Stifte und insbesondere Schweißnähte erschweren ferner den Zugang zu den Brennstäben, der unter Umständen nur durch einen zerstörenden Eingriff möglich wird. Daher sind bisher Inspektionen und Reparaturen an derartigen Brennstäben praktisch undurchführbar oder sind jedenfalls nicht vorgenommen worden. Hierzu wird z. B. auf den Artikel "Fuel element design for the 300 MW(e)GCFR", von A.R.Veca et al., Nucl. Eng. and Design, Vol. 40 (1977) No. 1, Jan. 1977, verwiesen.

Manche Reaktoren, vor allem sowjetischer Bauart, werden durch Absorberelemente gesteuert, die die gleichen Außenabmessungen wie die Brennelemente aufweisen und ebenfalls einen langgestreckten, oben und unten mit Endstücken verschlossenen Kasten besitzen, in dem ein langgestreckter Absorberkörper angeordnet ist. Einige solcher Absorberelemente sind zur Steuerung des Reaktors an der Stelle von Brennelementen vorgesehen und werden axial in die heiße Zone des Reaktors ein- und ausgefahren. Sie können dabei über eine Steckverbindung axial an ein Brennelement angesetzt und über eine zentrale Steuerstange in der Mitte der Kästen miteinander verbunden sein, so daß ein Gebilde doppelter Länge entsteht, das als Ganzes in der heißen Zone axial verfahren wird.

Sollten bei derartigen Steuerelementen die Absorberkörper ausgewechselt oder Kasten, Endstücke und andere Bauelemente wiederverwendet werden, so ist ebenfalls ein einfacher Zugang zum Kasteninneren erforderlich, bei dem mindestens ein Endstück von dem Kasten gelöst wird. Dies ist bisher nicht möglich.

Aus konstruktiven Gründen des Reaktors und der im Reaktor vorgegebenen Strömungsverhältnisse ist dabei ein Übergang vom polygonalen Querschnitt des Kastens auf runde Querschnitte nötig, was nur durch aufwendige, mehrteilige Verbindungen möglich erscheint.

Aus der EP-A-0 383 662 ist ein Käfig mit oktogonalem Querschnitt zur Aufnahme von Absorberstäben eines mit flüssigem Metall gekühlten Reaktors bekannt, wobei der Käfig an seinem oberen Ende nach Art eines Bajonetts gemäß dem Oberbegriff des Anspruchs 1 an einer Abdeckplatte befestigt ist. Diese Abdeckplatte ist praktisch rund und weist einige nasenartige Vorsprünge in Positionen auf, die in einer ersten Relativlage, in der die Platte axial in den Kasten eingesetzt wird, in die Ecken des polygonalen Kastens ragen, aber nach dem Einsetzen durch eine Drehung in eine zweite Relativlage gebracht werden, in der sie in Schlitze des Kastens eingreifen. Diese Vorsprünge haben in axialer Richtung die Dicke der Platte und sind nicht profiliert. Damit können keine radialen Kräfte auf das obere Kastenende übertragen werden, falls der Kasten sich verbiegen könnte. Außerdem entstehen in der zweiten Relativlage Hohlräume zwischen der runden Abdeckplatte und dem diagonalen Kasten; dadurch bilden sich ungünstige Strömungsverhältnisse. Für das Oberende des Kastens wird also ein Abdeckteil benötigt, das einerseits dem oktogonalen Querschnitt des Kastens so angepaßt ist, daß praktisch keine Hohlräume entstehen, andererseits so rund , daß Drehbewegungen bei der Montage noch möglich sind.

Eine Konstruktion aus der US-A-3.169.097 verwendet zwar ein polygonales Einsatzteil zum Abdecken des Kastens und ein ringförmiges Aufsatzteil entsprechend dem Oberbegriff des Anspruchs 2, jedoch werden hierzu mehrere getrennte Bauteile benötigt.

Der Erfindung liegt die Aufgabe zugrunde, mit möglichst wenig Aufwand eine lösbare Verbindung zu schaffen, die die erwähnten Nachteile vermeidet.

Die Erfindung sieht eine Art "Bajonett-Verschluß" vor, der nach einer ersten Variante der Erfindung bei einem Element gemäß dem Anspruch 1 durch seitliche Nasen des Endteils gebildet wird, die ein schwalbenschwanz-ähnliches Profil bilden. Das Endteil wird in axialer Richtung in den Kasteninnenraum eingeschoben und anschließend insgesamt um die Längsachse gedreht, bis die Nasen in ein entsprechendes, nutenförmiges Profil, das in die Innenseiten der Kastenseitenwände eingearbeitet ist, eingreifen und eine formschlüssige Verbindung darstellen.

Demnach weist das erfindungsgemäße Element für einen Kernreaktor also einen langgestreckten Kasten auf, dessen Innenraum einen polygonalen Querschnitt aufweist und von Seitenwänden begrenzt wird, die zu einer Längsachse parallel verlaufen. Vorzugsweise ist der Kasten oben offen, und die Oberkanten der Seitenflächen bilden einen die Kastenöffnung umgebenden Kastenrand, es kann aber auch alternativ oder zusätzlich das untere Kastenende eine derartige Kastenöffnung tragen. In einem vorgegebenen Abstand vom Kastenrand verläuft ein nutenförmiges Profil, das in die Innenseiten der Seitenwände eingearbeitet ist. Im Innenraum des Kastens befindet sich ein Bündel zur Brennelement-Achse paralleler Stäbe oder ein langgestreckter Absorberkörper. Das Brennelement enthält ferner ein Endteil mit parallel zu der Achse verlaufenden Seitenflächen, die dem polygonalen Querschnitt des Kastenraumes so angepaßt sind, daß dieses Endteil in einer ersten Relativlage zum Kasten bei der Montage von außen axial in den Kasten einsetzbar und bei der Demontage nach außen axial verschiebbar ist. In dieser ersten Relativlage stehen die Seitenflächen des Endteils praktisch unmittelbar den Seitenwänden des Kastens gegenüber, während die zwischen den Seitenflächen des Endteils liegenden Ecken abgerundet sind. Diese abgerundeten Ecken sind in axialer Richtung so geformt, daß sie Nasen bilden, die in das nutenförmige Profil eingreifen und formschlüssig mit den Kastenwänden verbunden sind, sobald das Endteil um die Längsachse in eine zweite Relativlage gedreht ist, die der Normallage beim Reaktorbetrieb entspricht. In axialer Richtung ähnelt das Profil der Nasen einem Schwalbenschwanz und die Nuten der Seitenwände sind entsprechend keilförmig. Dadurch wird beim Schließen dieses Bajonett-Verschlusses die Kastenwand radial mit dem Endteil verkeilt; der Kasten kann sich also im Bereich des Endteils nicht ausbeulen und das Endteil kann nicht seitlich aus den Nuten rutschen.

In Kombination oder unabhängig sieht eine zweite Variante der Erfindung die Merkmale des Anspruchs 2 vor. Dabei ist das Endteil ein Einsatzteil, das mit einem ringförmigen, axial über den Kastenrand vorstehenden Aufsatzteil kombiniert wird. Die beiden Teile sind dabei gemeinsam von der einen in die andere Relativlage drehbar. Ein Schwalbenschwanz-Profil ist hierbei nicht unbedingt erforderlich, da Aufsatzteil und Endteil ein hinreichend stabiles, einstückiges Bauteil bilden.

Vorteilhafte Weiterbildungen der Erfindung sind in den Unteransprüchen gekennzeichnet.

Anhand von mehreren Figuren und Ausführungsbeispielen wird die Erfindung näher erläutert. Dabei wird von dem häufigen Fall ausgegegangen, daß der Kasten oben offen ist und das Oberteil des Elementes das Endteil bildet, das mit dem Kasten durch die erfindungsgemäße Bajonett-Verbindung lösbar verbunden ist. In diesem Fall ist vorzugsweise auch das Unterende des Kastens offen und dort ist eine entsprechende Bodenplatte lösbar eingesetzt. Es kann aber auch das untere Endteil des Brennelementes mit dem Bajonett-Verschluß versehen sein. Es zeigen:
Fig. 1 einen Querschnitt durch die Hälfte von Oberteil und Kasten in der ersten Relativlage,
Fig. 2 den gleichen Querschnitt in der zweiten Relativlage, jeweils bei einem Element in Form eines regelmäßigen Sechsecks,
Fig. 3 und Fig. 4 entsprechende Querschnitte bei einem Element mit quadratischem Querschnitt,
Fig 5, 6, 7 und 8 den Längsschnitt durch verschiedene Formen der nasen- und nutenförmigen Profile,
Fig. 9 und Fig. 10 entsprechende Längsschnitte für eine Bajonettverbindung mit mehreren übereinander liegenden Aufnahmekanälenfür mehrere übereinander angeordnete Nasen,
Fig. 11 und Fig. 12 jeweils einen Längsschnitt im oberen Bereich eines halben Brennelementkastens und seiner weiteren Bestandteile,
Fig. 13 und Fig. 14 das Unterteil eines Steuerelementes im Längsschnitt und Querschnitt,
Fig. 15 einen Längsschnitt durch das obere Endteil eines Steuerelementes nach der Erfindung,
Fig. 16 und Fig. 17 eine Aufsicht von oben und einen Querschnitt durch das obere Endteil des Steuerelementes nach Fig. 15.

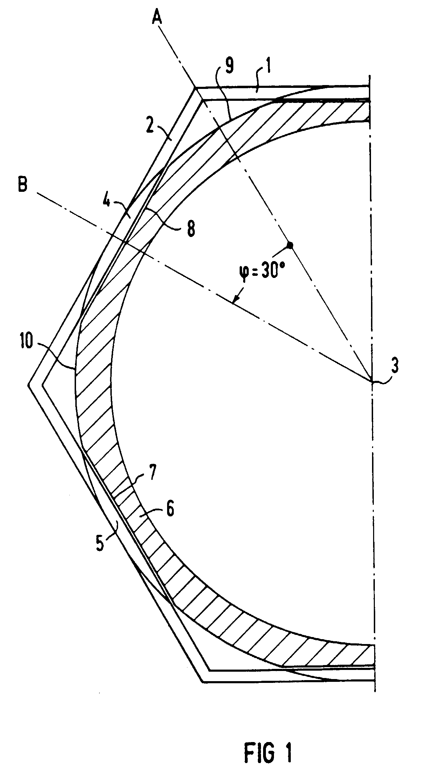

Die vieleckigen Kästen besitzen im allgemeinen ein regelmäßiges Polygon als Querschnitt, wie in Fig. 1 am Fall eines regelmäßigen Sechseckes dargestellt ist. Die Seitenwände, die z.B. mit 1 und 2 gekennzeichnet sind, tragen ein nutenförmiges Profil, das in einer zur Brennelement-Achse 3 praktisch senkrechten Ebene verläuft. Dieses nutenförmige Profil ist z.B. dadurch erzeugt, daß der Kasten eingespannt und eine Nut mittels eines Drehmeisels in die Innenwand des Kastens eingearbeitet wird. Wird dieser Drehmeisel oder ein anderes Werkzeug auf einer Schraubenlinie bewegt, so können auch Nuten in Form eines ein- oder mehrgängigen Gewindes entstehen, die mit einem vorgegebenen Neigungswinkel zur Brennelement-achse schraubenförmig um die Brennelement-Achse verlaufen.

Mit A ist dabei eine als Bezugsachse dienende Diagonale zwischen zwei gegenüberliegenden Ecken des regelmäßigen n-Eckes bezeichnet. Das nutenförmige Profil bildet dann Aufnahmekanäle 4, 5, die nur in Nähe der axialen Mittellinie der Seitenflächen in den Seitenwänden des Kastens verlaufen. Das Oberteil 6 des Brennelementes weist in der in Fig. 1 gezeigten Schnittebene einen Wulst auf, der z.B. ringförmig gefertigt sein kann, in den aber Seitenflächen 7, 8 eingeschliffen sind, die den die Aufnahmekanäle 4, 5 tragenden Seitenwänden des Kastens gegenüberstehen. Die axiale Mittellinie einer Seitenfläche ist also durch den Schnittpunkt einer Achse B mit der Seitenfläche 8 gegeben, die eine dem Oberteil zugeordnete Bezugsachse darstellt.

Dadurch entsteht ebenfalls ein Querschnitt in Form eines regelmäßigen n-Eckes, dessen zwischen zwei Seitenflächen liegenden Ecken 9, 10 aber abgerundet sind und Nasen bilden. In axialer Richtung sind die Nasen derart an das Profil der Aufnahmekanäle 4, 5 angepaßt, daß durch eine Drehung des n-eckigen Oberteils um 360°/2n, also den Winkel 30° zwischen den Achsen A und B, diese Nasen 9, 10 in die entsprechenden Aufnahmekanäle eingedreht werden und dort eine formschlüssige Verbindung zwischen den Kastenwänden 1, 2 und dem Oberteil 6 bilden.

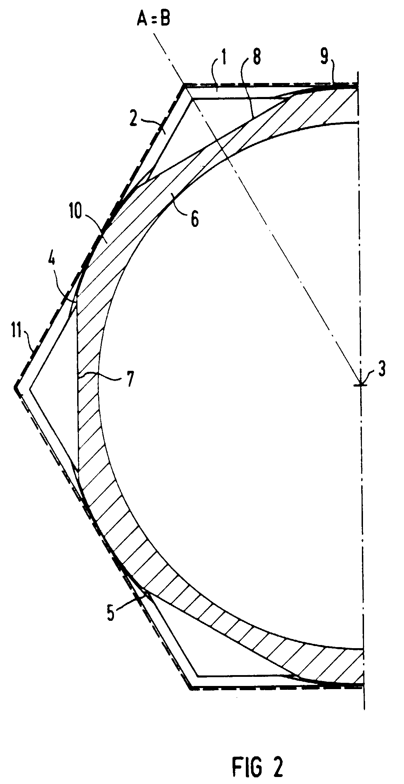

Fig. 1 zeigt das Oberteil in der durch den Winkel zwischen den Achsen A und B gegebenen ersten Relativlage, bei der das Oberteil zum Montieren axial von oben in den Kasten eingesetzt bzw. zum Demontieren nach oben herausgenommen werden kann. Fig. 2 zeigt das gleiche Brennelement in der für den Dauerbetrieb des Reaktors vorgesehenen Position, bei der durch die erwähnte Drehung die Achsen A und B zur Dekkung gebracht sind.

Mit der unterbrochenen Linie 11 ist dabei die Außenkontur des größten Kastens dargestellt, der aufgrund der erlaubten Toleranzen noch zulässig ist. Daher wird vorteilhaft die Einstichtiefe des erwähnten Drehmeisels, die den größten Öffnungsquerschnitt der von den nutenförmigen Profil gebildeten Aufnahmekanäle festlegt, so gewählt, daß er so groß oder nur geringfügig größer ist als der Kreis, der dem durch die Linie 11 dargestellten Polygon einbeschrieben ist. Dieser Kreis legt dann auch praktisch den maximalen seitlichen Vorsprung des Wulstes gegenüber der Brennelement-Achse 3 fest.

Dadurch entstehen Aufnahmekanäle in jeder Seitenwand des Kastens, die nicht nur die Zwischenräume zwischen den Ecken der Seitenwände 1 und 2 und dem Oberteil 6 miteinander verbinden, sondern auch in Form von bogenförmigen Teilkanälen von diesen Zwischenräumen zu den Außenseiten der Seitenwände führen.

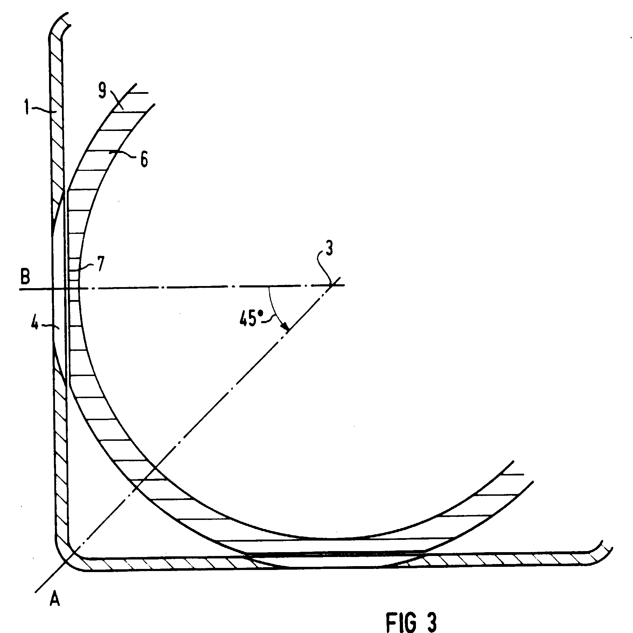

Fig. 3 zeigt am Beispiel eines rechteckigen Kastens 1 mit den entsprechenden Aufnahmekanälen 4, wie nun das Oberteil 6 mit den Seitenflächen 7 und den als Nasen dienenden abgerundeten Ecken 9 gestaltet ist, damit das Oberteil in der Montageposition axial im Kasten beweglich ist. Diese Montageposition ist durch die erste Relativlage gegeben, bei der die als Bezugsachse des Kastens dienende Diagonale A und die entsprechende Bezugsachse B des Oberteils, die von der Brennelement-Achse 3 zur Mitte der Seitenfläche 7 führt, einen Winkel von 360°/2n = 45° einschließt.

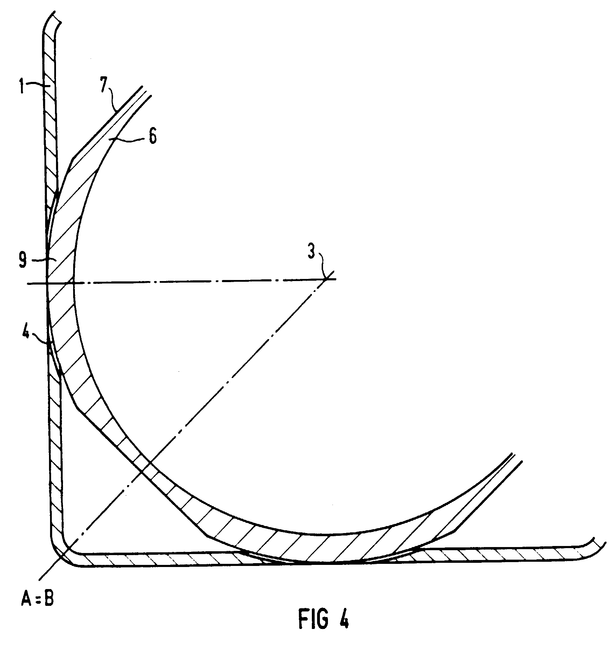

Durch Drehung um diese 45° wird das Bauteil in die in Fig. 4 gezeigte Position gedreht, bei der die Nasen 9 formschlüssig in die Aufnahmekanäle 4 eingreifen.

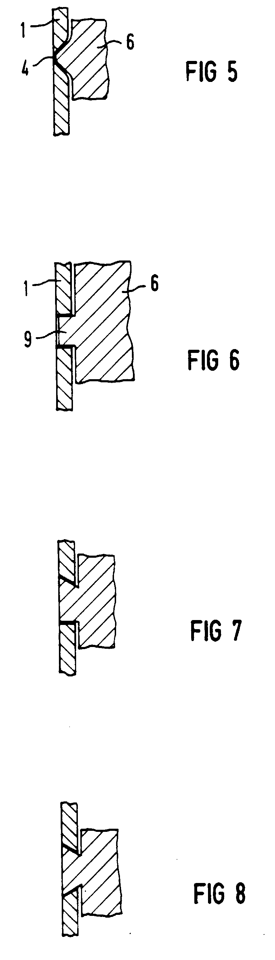

Fig. 5 zeigt einen Längsschnitt durch das Oberteil 6 und den Kasten 1, bei dem das axiale Profil der Aufnahmekanäle 4 deutlich wird. Dieses axiale Profil kann entsprechend Fig. 6 quadratisch sein. Eine besonders kippsichere formschlüssige Verbindung ergibt sich aber, wenn die Nasen im axialen Längsschnitt einen zur Brennelement-Achse geneigten oberen (Fig. 7) oder unteren Rand aufweisen. Bevorzugt ist die Form eines Schwalbenschwanzes (Fig. 8) mit geneigtem oberen und unteren Rand.

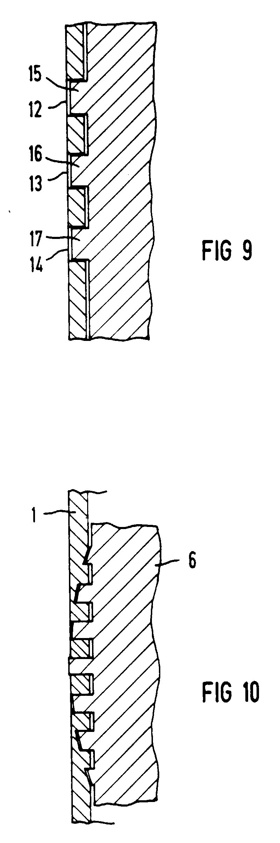

Wie Fig. 9 zeigt, können in jeder Seitenwand mehrere Aufnahmekanäle 12, 13, 14 für entsprechende, übereinander liegende Nasen 15, 16 und 17 vorgesehen sein. Eine besonders stabile Verbindung ergibt sich, wenn der erwähnte Wulst des Oberteils, in den die Seitenflächen eingearbeitet sind, tonnenförmig gewölbt ist und die Nasen durch entsprechende Kerbung dieses Wulstes gebildet werden. Die Einhüllende dieser Nasen ist dann eine kugelförmige oder tonnenförmige Fläche, wie Fig. 10 darstellt.

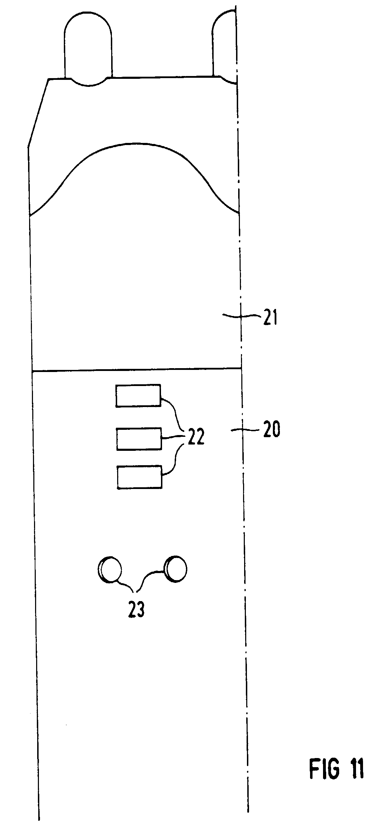

Fig. 11 zeigt die Außenansicht einer Seitenwand 20 des Kastens, über die ein Endstück 21 des Oberteiles herausragt. In der Seitenwand 20 sind nach außen führende Fenster 22 zu erkennen, die durch das nutenförmige Profil an der Innenseite der Seitenwände entstehen. Öffnungen 23 erlauben, im Notfall für eine Kühlung der Stäbe im Kasteninneren auch das Betriebsmedium zu benutzen, das sich sonst im Zwischenraum zwischen den Brennelementen befindet.

Das obere Endstück 21 weist zunächst Außenflächen auf, die mit der Kastenwand 20 fluchten, geht aber dann in einen ringförmigen Kragen über, dessen oberer Rand ein entsprechendes Profil zum Handhaben und Positionieren des Brennelementes aufweist.

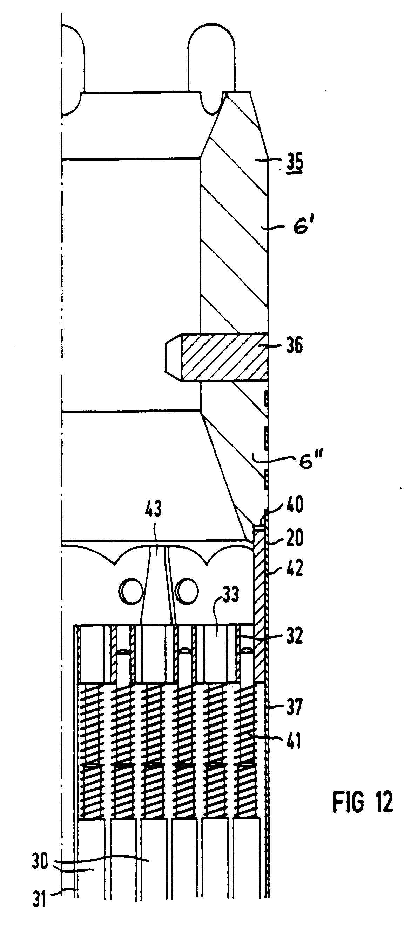

Fig. 12 zeigt eine entsprechende Innenansicht des Brennelementes im Betriebszustand. Dabei sind die oberen Endkappen von nebeneinander und hintereinander angeordneten, zueinander parallelen Stäben gezeigt, die mit radioaktiven Material gefüllt sind. Außerdem ist ein weiterer, als Führungsrohr oder Instrumentierungsrohr ausgebildeter Stab 31 erkennbar. Diese Stäbe und Endkappen sind in einem Stabhaltegitter 32 geführt oder auf ähnliche Weise an einem derartigen Halteelement befestigt, das Durchtrittsöffnungen 33 für das Betriebsmedium enthält.

Das Oberteil hat die Form einer Hülse 35 und weist an seiner Innenfläche Vorsprünge 36 auf, an denen Greif- und Drehwerkzeuge angreifen können, um das Oberteil in der ersten Relativlage (Montageposition) von oben in den Kasten 34 einzusetzen und dann in die zweite Relativlage (Betriebsposition) zu drehen.

Um diese Betriebsposition gegen ein Verdrehen zu sichern, ist an der Unterseite des Oberteils mindestens eine in axialer Richtung nach oben weisende Ausnehmung 40 vorgesehen. In dieser Ausnehmung kann ein Stift 42 bzw. 43 oder ein ähnliches Verriegelungselement, das gegenüber dem Oberteil federnd unter dem Oberteil gelagert ist, eingreifen, sobald das Oberteil in die Betriebsstellung gebracht ist. Dieses Verriegelungselement ist, wie Fig. 12 zeigt, an der Oberseite des Halteelementes 32 befestigt, das durch Druckfedern 41 gegen die Unterseite des Oberteiles 35 gedrückt wird.

Zur Montage des Brennelementes werden z.B. zunächst die Stäbe eingeführt, dann wird das Halteelement 32 aufgesetzt und gegen die Druckfedern nach unten gedrückt. Dabei werden die unteren Kappen der Stäbe 30, 31, die auf einem unteren Haltegitter oder einer ähnlichen Fußplatte des Brennelementes aufstehen, gegen die Fußplatte gepreßt und die Federn 41 noch weiter zusammengedrückt, um das Einsetzen und Eindrehen des Oberteils zu ermöglichen. Bei Entlastung der Federn rastet in der Betriebsposition der Stift 42 in die Ausnehmung 40 ein und eine drehgesicherte, stabile Verbindung zwischen dem Kasten 20 und dem Oberteil ist hergestellt.

Zur Demontage wird zunächst das Halteelement 32 wieder nach unten gedrückt und der Stift 42 gibt die Ausnehmung 40 frei. Dadurch kann das Oberteil 35 herausgedreht und abgenommen werden. Dadurch wird das Halteelement mit den darunter liegenden Brennstäben zugänglich und das ganze Bündel kann aus dem Kasten gezogen werden oder es können auch einzelne Brennstäbe ausgewechselt werden.

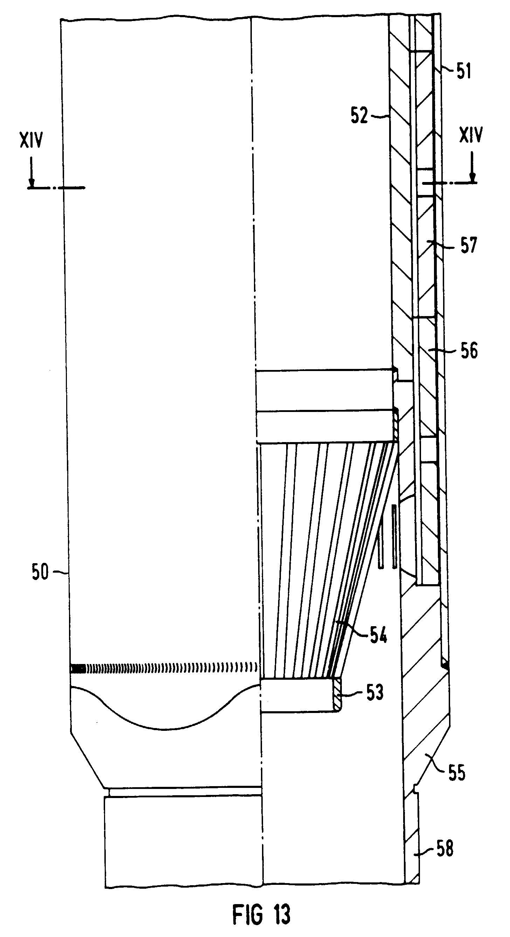

Die Fig. 13 zeit links den unteren Teil einer Seitenwand 50, die zu dem Kasten 51 eines Steuerelementes gehört, dessen Längsschnitt die rechte Hälfte der Fig. 13 zeigt und der ebenfalls ein regelmäßiges Hexagon als Querschnitt besitzt.

Das Unterende einer Innenhülse 52, die sich durch das ganze Element erstreckt, läuft konisch in einen zuflußstutzen 53 mit Durchtrittsöffnungen 54 aus. Dieser Zuflußstutzen kann ebenfalls lösbar mit dem Kasten 51 verbunden sein, vorteilhaft durch einen erfindungsgemäßen Bajonettverschluß. Im vorliegenden Fall sitzt der Kasten 51 auf Vorsprüngen des unteren Endteils 55 auf und kann dort verschweißt sein.

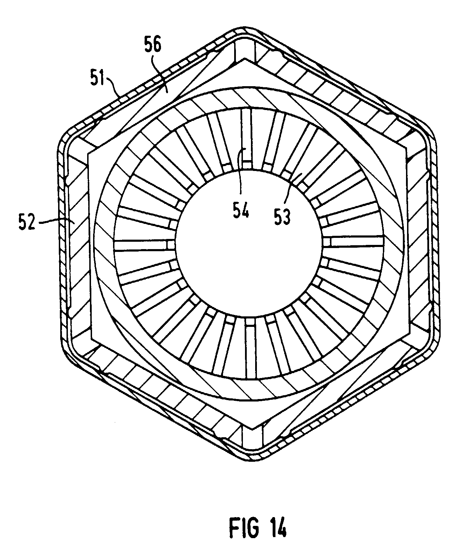

Der Raum zwischen Innenhülse 52 und Kasten 51 trägt den Absorberkörper, der hier aus hexagonalen Ringen 56, 57 aus Borstahl besteht. Fig. 14 zeigt einen entsprechenden Querschnitt in der Ebene XIV-XIV.

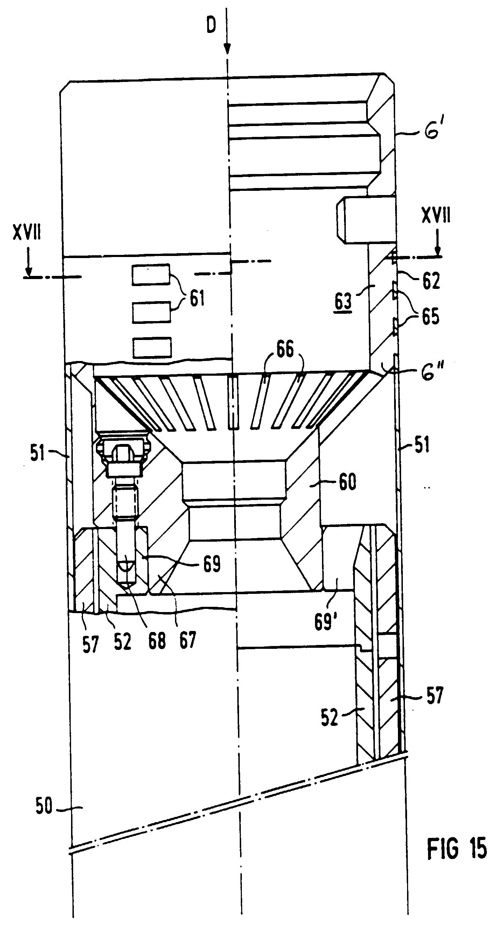

Das Absorberelement kann mit einem Kragen 58 seines unteren Endteils 55 auf das obere Endteil eines Brennelementes gesteckt werden. Der Konus 53 kann dabei zur Führung einer Steuerstange (nicht dargestellt) dienen, die von einer Manschette 60 (Fig. 15) im oberen Endteil des Steuerelementes durch die Innenhülse 52 des Absorberelementes, gas obere Endteil der daran angesetzten Brennelementes und dessen Führungsrohr 31 (Fig. 12) hindurch bis zu der Bodenplatte am unteren Ende des Brennelementes reicht.

Das obere Ende der Seitenwand 50 ist im linken Teil der Fig.15 erkennbar, deren rechter Teil einen Längsschnitt durch das obere Ende des Steuerelementes zeigt. Dabei sind die untereinanderliegenden Teilkanäle 65 zu erkennen, die als Profil in die Innenfläche der Seitenwand 51 des Kastens eingearbeiten sind, wobei in der Mitte der Seitenwände nach außer führende Fenster 61 entstehen. Im diese Känäle greifen Nasen 62 an den Ecken eines oberen Endteiles 63 des Steuerelementes formschlüssig ein, sobald das Endteil in seine für den Reaktorbetrieb vorgesehene Position gedreht ist, wie dies anhand der Figuren 1 und 2 bereits für ein Endstück eines Brennelementes erläutert wurde.

Die Manschette 60, in die das Endteil 63 in Form eines mit Austrittsöffnungen 66 versehenen Konus ausläuft, trägt einen seitlichen Ansatz 67 mit einer Bohrung, die mit einem Innengewinde zum Halten einer Schraube 68 versehen ist. Diese Schraube kommt in der für den Reaktorbetrieb vorgesehenen Position über einer Aussparung an einem Vorsprung 69 zu liegen, in die die Schraube eingedreht werden kann. Die Schraube dient also als ein axial verschiebbares Verriegelungselement, während der Vorsprung 69 am Brennelementkasten oder, wie im vorliegenden Fall, an der in den Kasten eingesetzten Innenhülse befestigt ist.

In Fig. 15 ist rechts ein weiterer derartiger Vorsprung 69' gezeigt, der auch zur Zentrierung der Innenhülse 6C sowie als Anschlag dient, an dem ein entsprechender Anschlagkörper (nicht in Fig. 15 erkennbar) am Endteil anschlägt sobald das Endstück in seine zweite Relativlage gedreht ist, in der das Verriegelungselement 68 über der Aussparung im Vorsprung 69 zu liegen kommt. Das Endstück, das in der ersten Relativlage in den Kasten eingesetzt wurde, kann also nicht über die zweite Relativlage hinaus verdreht werden.

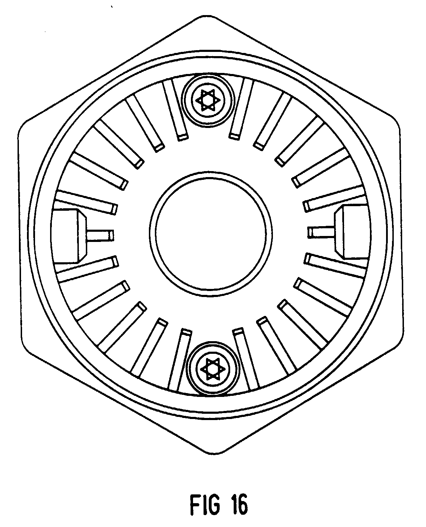

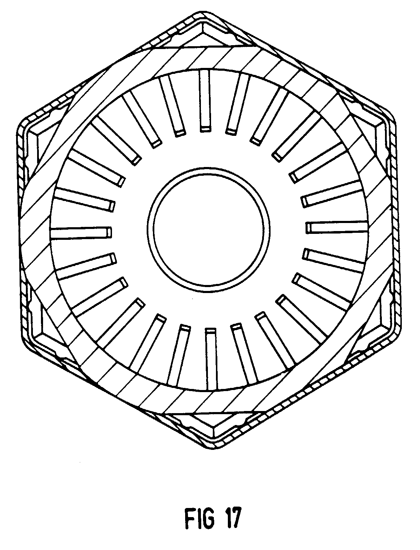

Der Pfeil D in Fig. 15 gibt die Blickrichtung für die in Fig. 16 gezeigte Aufsicht auf das obere Endteil des Steuerelementes in der zweiten Relativlage von Endteil und Kasten an, während die Schnittebene XVII-XVII den in Fig. 17 gezeigten Querschnitt bezeichnet.

Das Steuerelement kann also oben leicht geöffnet werden, indem sein oberes Endteil zurück in die erste Relativlage zum Kasten gedreht und axial nach oben aus dem Kasten gezogen wird.

## Patentansprüche

1. Brennelement oder Steuerelement für einen Kernreaktor, mit
a) einem langgestreckten Kasten mit einem Innenraum, der von zu einer Längsachse (3) parallelen Seiten (1, 2) begrenzt ist und einen polygonalen Querschnitt aufweist, und mindestens einer von einem Kastenrand umgebenen Kastenöffnung an einem der beiden Enden des langgestreckten Kastens,
b) einem in einem vorgegebenen Abstand vom Kastenrand verlaufenden, in die Innenseiten der Seitenwände eingearbeiteten, nutenförmigen Profil (4, 5),
c) einem Bündel zur Längsachse paralleler Stäbe bzw. einem langgestreckten Absorberkörper im Innenraum des Kastens,
d) einem Endteil (6) mit parallel zu der Längsachse verlaufenden Seitenflächen (7, 8), die dem polygonalen Querschnitt des Kastenraumes so angepaßt sind, daß das Endteil (6) in einer ersten Relativlage beim Montieren axial von außen in die Kastenöffnung einsetzbar und beim Demontieren nach außen axial verschiebbar ist, dadurch gekennzeichnet, daß
e) in der ersten Relativlage die Seitenflächen (7, 8) des Endteils den Seitenwänden (1, 2) des Kastens gegenüberstehen und die zwischen den Seitenflächen des Endteils liegenden Ecken abgerundet und in axialer Richtung so geformt sind, daß sie Nasen (9, 10) mit einem Schwalbenschwanz-ähnlichen Profil bilden, die in das nutenförmige Profil eingreifen und formschlüssig mit den Kasten-seitenwänden verbunden sind, sobald das Endteil um die Längsachse in eine zweite Relativlage für den Betrieb des Kernreaktors gedreht ist.

2. Brennelement oder Steuerelement für einen Kernreaktor, mit
a) einem langgestreckten Kasten mit einem Innenraum, der von zu einer Längsachse (3) parallelen Seiten (1, 2) begrenzt ist und einen polygonalen Querschnitt aufweist, und mindestens einer von einem Kastenrand umgebenen Kastenöffnung an einem der beiden Enden des langgestreckten Kastens,
b) einem in einem vorgegebenen Abstand vom Kastenrand verlaufenden, in die Innenseiten der Seitenwände eingearbeiteten, nutenförmigen Profil (4, 5),
c) einem Bündel zur Längsachse paralleler Stäbe bzw. einem langgestreckten Absorberkörper im Innenraum des Kastens,
d) einem Einsatzteil (6") mit parallel zu der Längsachse verlaufenden Seitenflächen (7, 8), die dem polygonalen Querschnitt des Kastenraumes so angepaßt sind, daß das Einsatzteil (6") in einer ersten Relativlage beim Montieren axial von außen in die Kastenöffnung einsetzbar und beim Demontieren nach außen axial verschiebbar ist, und
e) einem ringförmigen, axial über den Kastenrand vorstehenden Aufsatzteil (6'),
**dadurch gekennzeichnet,** daß
f) in der ersten Relativlage die Seitenflächen (7, 8) des Einsatzteils den Seitenwänden (1, 2) des Kastens gegenüberstehen und die zwischen den Seitenflächen des Einsatzteils liegenden Ecken abgerundet und in axialer Richtung so geformt sind, daß sie Nasen (9, 10) bilden, die in das nutenförmige Profil eingreifen und formschlüssig mit den Kasten-Seitenwänden verbunden sind, sobald das Einsatzteil um die Längsachse in eine zweite Relativlage für den Betrieb des Kernreaktors gedreht ist, und
g) das Aufsatzteil (6') gemeinsam mit dem Einsatzteil von der ersten Relativlage in die zweite Relativlage drehbar ist und Aufsatzteil (6') und Einsatzteil (6") ein einstückiges Endteil bilden.

3. Element nach Anspruch 2,
**dadurch gekennzeichnet,** daß das Aufsatzteil (6') Außenflächen besitzt, die in der zweiten Relativlage fluchtend an den Kastenrand anschließen.

4. Element nach Anspruch 2 oder 3,
**dadurch gekennzeichnet,** daß das Aufsatzteil (6') ein Ende besitzt, das sich zu einem praktisch zylindrischen Ring verjüngt.

5. Element nach einem der Ansprüche 2 bis 4,
**dadurch gekennzeichnet,** daß das nutenförmige Profil und die Nasen in axialer Richtung so schwalbenschwanz-ähnlich geformt sind, daß ihr oberer und/oder unterer Rand gegenüber der Längsachse geneigt ist.

6. Element nach einem der Ansprüche 1 bis 5,
**dadurch gekennzeichnet,** daß das nutenförmige Profil wenigstens einen Aufnahmekanal (4, 5) für die Nasen (9, 10) bildet, der um die Längsachse in einer praktisch senkrechten Ebene verläuft.

7. Element nach einem der Ansprüche 1 bis 5,
**dadurch gekennzeichnet**, daß das nutenförmige Profil wenigstens einen Aufnahmekanal für die Nasen bildet, der schraubenförmig mit einer vorgegebenen Neigung gegenüber der Längsachse um diese Achse verläuft.

8. Element nach einem der Ansprüche 1 bis 7,
**dadurch gekennzeichnet,** daß der Querschnitt des Kastens und der Kastenöffnung ein regelmäßiges Polygon beschreibt und daß das nutenförmige Profil bogenförmige Teilkanäle (4, 5) bildet, die in der ersten Relativlage jeweils die Zwischenräume, die an zwei Ecken des Polygons zwischen dem Polygoneck und einer Nase (9, 10) des Endteils entstehen, miteinander verbinden.

9. Element nach Anspruch 8,
**dadurch gekennzeichnet,** daß in jeder Seitenwand der Teilkanal in der Mitte der Seitenwand zum Äußeren des Kastens hin offen ist.

10. Element nach Anspruch 8 oder 9,
**dadurch gekennzeichnet,** daß das nutenförmige Profil in jeder Seitenwand mehrere zueinander parallele, untereinander angeordnete Teilkanäle (12, 13, 14) aufweist.

11. Element nach Anspruch 10,
**dadurch gekennzeichnet,** daß die abgerundeten Ecken mehrere untereinander liegende Nasen tragen, deren Einhüllende tonnenförmig gewölbt ist.

12. Element nach einem der Ansprüche 1 bis 11,
**dadurch gekennzeichnet,** daß das Endteil in eine auf dem Kasten aufsitzende Hülse (3, 5) übergeht, die an ihrer Innenseite einen Vorsprung (36) mit einer Angriffsfläche für ein Werkzeug trägt.

13. Element nach einem der Ansprüche 1 bis 12,
**dadurch gekennzeichnet,** daß ein axial verschiebbares, an einer Seite des Endteils anliegendes Verriegelungselement (42) in der zweiten Relativlage in eine in diese Seite des Endteils eingearbeitete Ausnehmung (40) eingreift.

14. Element nach Anspruch 13,
**dadurch gekennzeichnet,** daß Endstücke der Stäbe (30, 31) in einem Halteelement (32) am offenen Ende des Kastens geführt sind, daß das Halteelement (32) federnd gegen eine Platte am anderen Ende des Kastens gelagert ist, und daß das Verriegelungselement (42) am Halteelement (32) befestigt ist.

15. Element nach Anspruch 13,
**dadurch gekennzeichnet,** daß das Verriegelungselement eine in die Ausnehmung einführbare Schraube ist, die in einem am Endteil angebrachten Gewinde gehalten ist.

16. Element nach einem der Ansprüche 1 bis 15,
**dadurch gekennzeichnet,** daß das Endstück und der Kasten oder ein Einsatz des Kastens jeweils mindestens einen Anschlag tragen, die verhindern , daß das Endstück aus der ersten Relativlage über die zweite Relativlage hinaus gedreht wird.

## Claims

1. A fuel assembly or control assembly for a nuclear reactor, comprising:
(a) an elongated case having an interior that is defined by side walls (1, 2) extending parallel to a longitudinal axis (3) and has a polygonal cross section and at least one opening surrounded by a rim at one of the two ends of the elongated case;
(b) a groove-like profile (4, 5) machined in the inner surfaces of the side walls and extending at a predetermined distance from the rim;
(c) a bundle of rods parallel to the longitudinal axis, or an elongated absorber body, in the interior of the case;
(d) an end part (6) having lateral surfaces (7, 8) extending parallel to the longitudinal axis which are adapted to the polygonal cross section of the interior of the case, so that during installation the end part (6) can be inserted axially from outside into the case opening in a first relative position and during disassembly can be axially displaced outwardly;
characterised in that
(e) in the first relative position the lateral surfaces (7, 8) of the end part are practically directly opposite the side walls (1, 2) of the case and the corners between the lateral surfaces of the end part are rounded and shaped in the axial direction to form protrusions (9, 10) having a dovetail-like profile which engage in the groove-like profile and are form-lockingly connected to the side walls of the case as soon as the end part is rotated about the longitudinal axis into a second relative position for operation of the nuclear reactor.

2. A fuel assembly or control assembly for a nuclear reactor, comprising:
(a) an elongated case having an interior that is defined by side walls (1, 2) extending parallel to a longitudinal axis (3) and has a polygonal cross section and at least one opening surrounded by a rim at one of the two ends of the elongated case;
(b) a groove-like profile (4, 5) machined in the inner surfaces of the side walls and extending at a predetermined distance from the rim;
(c) a bundle of rods parallel to the longitudinal axis, or an elongated absorber body, in the interior of the case;
(d) an insert (6') having lateral surfaces (7, 8) extending parallel to the longitudinal axis which are adapted to the polygonal cross section of the interior of the case, so that during installation the insert (6") can be inserted axially from outside into the case opening in a first relative position and during disassembly can be axially displaced outwardly; and
(e) an annular top part (6') projecting axially past the rim of the case;
characterised in that
(f) in the first relative position the lateral surfaces (7, 8) of the insert are practically directly opposite the side walls (1, 2) of the case and the corners between the lateral surfaces of the insert are rounded and shaped in the axial direction to form protrusions (9, 10) which engage in the groove-like profile and are form-lockingly connected to the side walls of the case as soon as the insert is rotated about the longitudinal axis into a second relative position for operation of the nuclear reactor, and
(g) the top part (6') can be rotated together with the insert from the first relative position into the second relative position and the top part (6") and insert (6') form an integral end part.

3. An assembly according to claim 2, characterised in that the top part (6') has outer surfaces which in the second relative position are next to and flush with the rim of the case.

4. An assembly according to claim 2 or claim 3, characterised in that the top part (6') has an end which tapers to a practically cylindrical ring.

5. An assembly according to one of claims 2 to 4, characterised in that the groove-like profile and the protrusions are formed in the axial direction to a dovetail-like shape such that their upper and/or lower rim is inclined to the longitudinal axis.

6. An assembly according to one of claims 1 to 5, characterised in that the groove-like profile forms at least one receiving channel (4, 5) for the protrusions (9, 10) which extends round the longitudinal axis in a plane practically perpendicular thereto.

7. An assembly according to one of claims 1 to 5, characterised in that the groove-like profile forms at least one receiving channel for the protrusions which extends helically round the longitudinal axis at a predetermined inclination to the longitudinal axis.

8. An assembly according to one of claims 1 to 7, characterised in that the cross section of the case and of the case opening describes a regular polygon and that the groove-like profile forms curved partial channels (4, 5) each of which in the first relative position connects the interstices which are formed at two corners of the polygon between the corner of the polygon and a protrusion (9, 10) of the end part.

9. An assembly according to claim 8, characterised in that in each side wall the partial channel is open to the outside of the case in the middle of the side wall.

10. An assembly according to claim 8 or claim 9, characterised in that the groove-like profile in each side wall has a plurality of mutually parallel partial channels (12, 13, 14) disposed one below the other therein.

11. An assembly according to claim 10, characterised in that the rounded corners carry a plurality of protrusions disposed one below the other, the envelope of which is arched in the form of a barrel.

12. An assembly according to one of claims 1 to 11, characterised in that the end part changes into a can (3, 5) seated on the case that carries on its inner surface a projection (36) having an engagement surface for a tool.

13. An assembly according to one of claims 1 to 11, characterised in that an axially displaceable locking element (42) adjoining one side of the end part engages in the second relative position into a recess (40) machined into this side of the end part.

14. An assembly according to claim 13, characterised in that end pieces of the rods (30, 31) are guided in a retaining element (32) at the open end of the case, that the retaining element (32) is resiliently supported against a plate at the other end of the case, and that the locking element (42) is secured to the retaining element (32).

15. An assembly according to claim 13, characterised in that the locking element is a screw that is held in a thread formed in the end part and can be introduced into the recess.

16. An assembly according to one of claims 1 to 15, characterised in that the end part and the case, or an insert of the case, each carries at least one stop that prevents the end part from being rotated out of the first relative position past the second relative position.

## Revendications

1. Assemblage combustible ou élément de commande destiné à un réacteur nucléaire, comportant
a) un caisson oblong dont l'intérieur est délimité par des côtés (1, 2) parallèles à un axe longitudinal (3) et dont la section transversale est polygonale, et au moins une ouverture de caisson entourée d'un bord de caisson sur l'une des deux extrémités du caisson oblong,
b) un profil (4, 5) de type rainure s'étendant à une distance prédéterminée du bord du caisson, qui est ménagé dans les faces intérieures des parois latérales,
c) un faisceau de crayons parallèles à l'axe longitudinal ou un corps d'absorbeur oblong, à l'intérieur du caisson,
d) une partie d'extrémité (6) comportant des surfaces latérales (7, 8) qui s'étendent parallèlement à l'axe longitudinal, qui sont adaptées à la section transversale polygonale de l'intérieur du caisson de telle sorte que, dans une première position relative, la partie d'extrémité (6) peut être insérée axialement à partir de l'extérieur dans l'ouverture du caisson lors du montage, et peut être décalée axialement vers l'extérieur lors du démontage,
caractérisé par le fait que
e) dans la première position relative, les surfaces latérales (7, 8) de la partie d'extrémité sont situées en face des parois latérales (1, 2) du caisson, que les angles situés entre les surfaces latérales de la partie d'extrémité sont arrondis et sont formés en direction axiale de telle sorte qu'ils constituent des becs (9, 10) dont le profil est analogue à une queue d'aronde, lesquels pénètrent dans le profil de type rainure et sont reliés aux parois latérales du caisson selon une liaison par formes complémentaires, dès que la partie d'insertion a été tournée autour de l'axe longitudinal dans une deuxième position relative prévue pour le fonctionnement du réacteur nucléaire.

2. Assemblage combustible ou élément de commande destiné à un réacteur nucléaire, comportant
a) un caisson oblong dont l'intérieur est délimité par des côtés (1, 2) parallèles à un axe longitudinal (3) et dont la section transversale est polygonale, et au moins une ouverture de caisson entourée d'un bord de caisson sur l'une des deux extrémités du caisson oblong,
b) un profil (4, 5) de type rainure s'étendant à une distance prédéterminée du bord du caisson, qui est inséré dans les faces intérieures des parois latérales,
c) un faisceau de crayons parallèles à l'axe longitudinal ou un corps d'absorbeur oblong, à l'intérieur du caisson,
d) une pièce d'insertion (6") comportant des surfaces latérales (7, 8) qui s'étendent parallèlement à l'axe longitudinal, qui sont adaptées à la section transversale polygonale de l'intérieur du caisson de telle sorte que, dans une première position relative, la pièce d'insertion (6") peut être insérée axialement à partir de l'extérieur dans l'ouverture du caisson lors du montage, et peut être décalée axialement vers l'extérieur lors du démontage, et
e) une pièce rapportée annulaire (6'), qui fait axialement saillie du bord du caisson,
caractérisé par le fait que
f) dans la première position relative, les surfaces latérales (7, 8) de la pièce d'insertion sont situées en face des parois latérales (1, 2) du caisson, que les angles situés entre les surfaces latérales de la pièce d'insertion sont arrondis et sont formés en direction axiale de telle sorte qu'ils constituent des tenons (9, 10), qui pénètrent dans le profil de type rainure et sont reliés aux parois latérales du caisson selon une liaison par formes complémentaires, dès que la partie d'extrémité a été tournée autour de l'axe longitudinal dans une deuxième position relative prévue pour le fonctionnement du réacteur nucléaire, et
g) que la pièce rapportée (6') peut être tournée avec la pièce d'insertion de la première position relative dans la deuxième position relative, et que la pièce rapportée (6') et la pièce d'insertion (6") forment une partie d'extrémité d'un seul tenant.

3. Assemblage ou élément selon la revendication 2,
caractérisé par le fait que la pièce rapportée (6') comporte des surfaces extérieures qui, dans la deuxième position relative, se raccordent au bord du caisson en étant alignées avec ce dernier.

4. Assemblage ou élément selon la revendication 2 ou 3,
caractérisé par le fait que la pièce rapportée (6') comporte une extrémité qui se rétrécit en une bague pratiquement cylindrique.

5. Assemblage ou élément selon les revendications 2 à 4,
caractérisé par le fait que le profil de type rainure et les becs sont formés en direction axiale de façon analogue à une queue d'aronde, de telle sorte que leur bord supérieur et/ou leur bord inférieur soient inclinés par rapport à l'axe longitudinal.

6. Assemblage ou élément selon l'une quelconque des revendications 1 à 5,
caractérisé par le fait que le profil de type rainure forme au moins un canal de logement (4, 5) pour les becs (9, 10), qui s'étend dans un plan pratiquement vertical autour de l'axe longitudinal.

7. Assemblage ou élément selon l'une quelconque des revendications 1 à 5,
caractérisé par le fait que le profil de type rainure forme au moins un canal de logement pour les becs, qui s'étend de façon hélicoïdale autour de l'axe longitudinal avec une inclinaison prédéterminée par rapport à cet axe.

8. Assemblage ou élément selon l'une quelconque des revendications 1 à 7,
caractérisé par le fait que la section transversale du caisson et l'ouverture du caisson décrivent un polygone régulier, et que le profil de type rainure forme des canaux partiels (4, 5) cintrés qui, dans la première position relative, relient entre eux les espaces intermédiaires qui sont engendrés à deux sommets du polygone, entre l'angle du polygone et un bec (9, 10) de la partie d'extrémité.

9. Assemblage ou élément selon la revendication 8,
caractérisé par le fait que dans chaque paroi latérale le canal partiel est ouvert au milieu de la paroi latérale en direction du caisson.

10. Assemblage ou élément selon la revendication 8 ou 9,
caractérisé par le fait que le profil de type rainure comporte dans chaque paroi latérale plusieurs canaux partiels (12, 13, 14) qui sont disposés parallèlement les uns par rapport aux autres.

11. Assemblage ou élément selon la revendication 10,
caractérisé par le fait que les angles arrondis comportent plusieurs becs situés les uns par rapport aux autres selon une courbe enveloppe cintrée en forme de tonneau.

12. Assemblage ou élément selon l'une quelconque des revendications 1 à 11 ,
caractérisé par le fait que la partie d'extrémité passe dans une douille (3, 5) disposée sur le caisson, dont la face intérieure comporte une saillie (36) avec une surface d'attaque pour un outil.

13. Assemblage ou élément selon l'une quelconque des revendications 1 à 12,
caractérisé par le fait qu'un élément de verrouillage (42) pouvant être déplacé axialement, qui prend appui sur un côté de la partie d'extrémité, s'engage dans la deuxième position relative dans un évidement (40) pratiqué de ce même côté de la partie d'extrémité.

14. Assemblage ou élément selon la revendication 13,
caractérisé par le fait que des parties d'extrémité des crayons (30, 31) sont guidées dans un élément de retenue (32) à l'extrémité ouverte du caisson, que l'élément de retenue (32) est monté de façon élastique contre une plaque à l'autre extrémité du caisson, et que l'élément de verrouillage (42) est fixé sur l'élément de retenue (32).

15. Assemblage ou élément selon la revendication 13,
caractérisé par le fait que l'élément de verrouillage est une vis pouvant être engagée dans l'évidement, qui est retenue dans un filetage prévu sur la partie d'extrémité.

16. Assemblage ou élément selon l'une quelconque des revendications 1 à 15,
caractérisé par le fait que la partie d'extrémité et le caisson, ou un insert du caisson, comportent respectivement au moins une butée, ces butées empêchant que la partie d'extrémité soit tournée de la première position relative au-delà de la deuxième position relative.
